(19) Europäisches Patentamt
European Patent Office
Office européen des brevets

(11) **EP 3 310 728 B1**

(12) **FASCICULE DE BREVET EUROPEEN**

(45) Date de publication et mention
de la délivrance du brevet:
**02.06.2021 Bulletin 2021/22**

(21) Numéro de dépôt: **16732985.3**

(22) Date de dépôt: **14.06.2016**

(51) Int Cl.:
*C03C 3/087* $^{(2006.01)}$    *B32B 17/10* $^{(2006.01)}$
*C03C 4/00* $^{(2006.01)}$    *C03C 4/02* $^{(2006.01)}$
*C03C 17/36* $^{(2006.01)}$

(86) Numéro de dépôt international:
**PCT/EP2016/063634**

(87) Numéro de publication internationale:
**WO 2016/202799 (22.12.2016 Gazette 2016/51)**

(54) **VITRAGE FEUILLETÉ POUR CONTRÔLE SOLAIRE**

MEHRSCHICHTGLAS FÜR SONNENSCHUTZ

LAMINATED GLAZING FOR SOLAR CONTROL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.06.2015 EP 15172973**

(43) Date de publication de la demande:
**25.04.2018 Bulletin 2018/17**

(73) Titulaire: **AGC Glass Europe
1348 Louvain-La-Neuve (BE)**

(72) Inventeurs:
- **LAMBRICHT, Thomas
  1360 Perwez (BE)**
- **DEPAUW, Jean-Michel
  1083 Bruxelles (BE)**
- **MARENNE, Ingrid
  5380 Forville (BE)**
- **BOLAND, François
  5030 Gemboux (BE)**
- **DOGIMONT, Audrey
  1495 Sart-Dames-Avelines (BE)**
- **DEGAND, Aline
  4300 Bleret (BE)**

(74) Mandataire: **AGC Glass Europe
Technovation Centre
Intellectual Property Department
Rue Louis Blériot 12
6041 Gosselies (BE)**

(56) Documents cités:
WO-A1-2005/115747    WO-A1-2015/011044
DE-A1-102005 016 389    US-A1- 2006 280 951
US-A1- 2008 149 902    US-A1- 2008 226 925
US-A1- 2012 275 018    US-A1- 2012 315 410

**Description**

La présente invention concerne des vitrages feuilleté comprenant un substrat transparent en verre, éventuellement coloré, revêtu d'une couche réfléchissant les infrarouges.

De tels vitrages feuilletés sont utilisés par exemple en tant que vitrages de bâtiments ou de véhicules, dans des structures simples ou multiples.

Dans le présent document, sauf indication contraire, les termes suivants sont utilisés en accord avec les définitions suivantes:

TL = transmission lumineuse = pourcentage du flux lumineux incident transmis par un produit (entre 380 et 780 nm) selon l'illuminant C et un observateur de 2°.

$TL_V$ = transmission lumineuse du substrat = pourcentage du flux lumineux incident transmis par le substrat de verre (entre 380 et 780 nm) selon l'illuminant C et un observateur de 2°. Elle est ici définie pour un verre de 4 mm d'épaisseur.

$TL_C$ = transmission lumineuse de la couche = pourcentage du flux lumineux incident transmis par un produit constitué de la couche déposée sur un substrat ayant une absorption nulle (entre 380 et 780 nm) selon l'illuminant C et un observateur de 2°.

RL = réflexion lumineuse = pourcentage du flux lumineux incident réfléchi par un produit (entre 380 et 780 nm) selon l'illuminant C et un observateur de 2°.

FS = g = facteur solaire = pourcentage du rayonnement énergétique incident qui est d'une part directement transmis par le produit et d'autre part absorbé par celui-ci puis rayonné par sa face opposée à la source d'énergie calculé selon la norme ISO9050 : 2003.

S = select = sélectivité = le rapport de la transmission lumineuse au facteur solaire.

TIR = transmission infrarouge = pourcentage du rayonnement infrarouge transmis (entre 780 et 2500 nm) par un produit, calculé selon la norme ISO9050 : 2003.

$TIR_C$ = transmission infrarouge de la couche = pourcentage du rayonnement infrarouge transmis (entre 780 et 2500 nm) par un produit constitué de la couche déposée sur un substrat ayant une absorption nulle, et calculé selon la norme ISO9050 : 2003.

RIR = réflexion infrarouge = pourcentage du rayonnement infrarouge réfléchi (entre 780 et 2500 nm) par un produit, calculé selon la norme ISO9050 : 2003.

$RIR_V$ = réflexion infrarouge du substrat avec un réflecteur idéal = pourcentage du rayonnement infrarouge réfléchi (entre 780 et 2500 nm) pour le substrat de verre portant une couche idéale réfléchissant à 100% dans l'infrarouge. Elle est définie ici pour un substrat de verre de 4 mm d'épaisseur, la couche étant déposée sur la face opposée au rayon incident, et calculée selon la norme ISO9050: 2003. La valeur de $RIR_V$ maximale de 100% est atteinte lorsqu'il n'y a aucune absorption dans le verre, et $RIR_V$ est d'autant plus faible que l'absorption dans le verre est grande, le long du trajet optique faisant 2*4 mm (aller-retour) = 8 mm.

$RIR_C$ = réflexion infrarouge de la couche = pourcentage du rayonnement infrarouge réfléchi (entre 780 et 2500 nm) par un produit constitué de la couche déposée sur un substrat ayant une absorption nulle, calculé selon la norme ISO9050 : 2003.

AIR : absorption infrarouge = pourcentage du rayonnement infrarouge absorbé (entre 780 et 2500 nm) par un produit, calculé selon la norme ISO9050 : 2003.

$AIR_C$ = absorption infrarouge de la couche = pourcentage du rayonnement infrarouge absorbé (entre 780 et 2500 nm) par un produit constitué de la couche déposée sur un substrat ayant une absorption nulle, calculé selon la norme ISO9050 : 2003.

Dans certaines circonstances, il est souhaitable que les vitrages de bâtiments ou de véhicules, ne laissent pas passer une proportion trop importante de rayonnement solaire incident total afin de ne pas surchauffer l'intérieur du bâtiment ou de l'habitacle tout en offrant une transmission lumineuse (TL) appropriée de manière à procurer un niveau d'éclairement suffisant à l'intérieur du bâtiment ou de l'habitacle. La transmission du rayonnement solaire incident total peut être exprimée en terme de facteur solaire (FS ou g), voir par exemple US 2012/0315410, WO2005/115747 ou US 2012/0275018.

Ces exigences quelque peu conflictuelles traduisent la volonté d'obtenir un vitrage présentant une sélectivité (S) élevée. Il est également souhaitable que les vitrages répondent à certains critères esthétiques en terme de réflexion lumineuse (RL) et de couleur en réflexion.

Depuis un certain temps déjà, pour réduire l'apport d'énergie solaire aux bâtiments ou aux véhicules, il est fait usage de verres colorés dans la masse. Les vitrages colorés, en plus d'offrir différentes esthétiques largement appréciées, permettent de diminuer le passage des infrarouges responsables de l'échauffement intérieur (ceux-ci étant principalement absorbés par le verre) tout en laissant passer la lumière visible, et font donc ainsi preuve de sélectivité.

Par la suite, une autre solution proposée fut l'usage de revêtements multicouches de contrôle solaire (aussi parfois appelés revêtements anti-solaires ou de protection solaire) sur des substrats en verre clair, puis extra-clair. Ces empilages multicouche de contrôle solaire offrent une bonne sélectivité en laissant passer la lumière visible et en réfléchissant les infrarouges. Des exemples de revêtements de contrôle solaire connus comprennent généralement plusieurs couches d'un métal réfléchissant les infrarouges, comme l'argent, chacune d'entre elles étant prise en sandwich entre des couches transparentes et anti-réfléchissantes de matériau diélectrique. La sélectivité de ce type d'empilage est d'autant meilleure que le nombre de couches réfléchissant les infrarouges présent dans le revêtement est élevé, assurant une réflexion des infrarouges accrue. Cependant il s'avère toujours difficile pour ces revêtements de contrôle solaire d'assurer à la fois haute sélectivité, aspect esthétique agréable, couleur en réflexion neutre et stable angulairement et réflexion lumineuse modérée.

Dès lors, on aurait pu croire que combiner ces deux solutions (substrat coloré dans la masse et couche de contrôle solaire) améliorerait d'autant plus la sélectivité d'un vitrage, mais les infrarouges traversant deux fois le verre coloré (une première fois en provenance du soleil vers l'intérieur, une seconde fois après réflexion sur la couche de contrôle solaire vers l'extérieur), il s'avère que ce dernier absorbe deux fois plus d'infrarouges, dont il réémet une partie vers l'intérieur, et en outre s'échauffe de façon dangereuse jusqu'à même parfois se briser. Une solution est alors de tremper le verre pour qu'il résiste à la casse thermique, mais il s'agit là d'une étape supplémentaire coûteuse et contraignante.

Il existe donc toujours un besoin de fournir des vitrages feuilletés hautement sélectifs, en particulier colorés ou à faible transmission lumineuse, ayant une faible réflexion lumineuse extérieure (c'est-à-dire, une fois monté, vu de l'extérieur du bâtiment/véhicule), une dépendance angulaire de la couleur en réflexion côté verre moindre, et qui ne nécessitent pas d'être trempés pour éviter les casses par échauffement thermique.

On a découvert que ces combinaisons de propriétés optiques requises peuvent être réalisées, et d'autres avantages peuvent être obtenus par un vitrage feuilleté, selon la revendication 1 de la présente invention, les revendications dépendantes présentant des modes de réalisation préférés.

La présente invention a en particulier pour objet un vitrage feuilleté comprenant un substrat transparent revêtu d'une couche réfléchissant les infrarouges, caractérisé en ce que le substrat est un verre caractérisé par une réflexion infrarouge $RIR_V$ telle que $RIR_V \geq 1.087 * TL_V$ et en ce que la couche réfléchissant les infrarouges est caractérisée par une transmission lumineuse $TL_C$ telle que $TL_C \geq 1.3 * TIR_C$.

Ainsi la solution apportée par la présente invention est pour le moins contre-intuitive, car elle démontre qu'il est nécessaire d'associer un revêtement sélectif à un verre qui, lui, est non-sélectif, pour donner un vitrage à sélectivité améliorée ou à tout le moins suffisante pour les applications voulues. En effet, on a trouvé que, classiquement, pour des verres sélectifs, une diminution de la transmission lumineuse (par choix esthétique, pour contrôle solaire ou pour toute autre raison) est invariablement liée à une diminution drastique de la $RIR_V$. A l'inverse, les vitrages selon l'invention permettent d'atteindre des transmissions lumineuses plus faibles tout en conservant une réflexion aux infrarouges très intéressante. En outre, on a trouvé que toutes les couches réfléchissant les infrarouges n'étaient pas aussi performantes pour atteindre les buts de l'invention et que des couches bloquant les infrarouges principalement par réflexion, plus que par absorption, étaient nécessaires.

Ainsi donc, les vitrages incorporant un substrat selon l'invention, combiné à un revêtement réfléchissant les infrarouges selon l'invention, peuvent fournir des vitrages feuilletés présentant un ou plusieurs des avantages suivants:

- une haute sélectivité même lorsque le vitrage comprend un substrat en verre de faible transmission lumineuse,
- une sélectivité améliorée par rapport au même vitrage incorporant un revêtement déposé sur un verre de même transmission lumineuse de l'art antérieur ayant une réflexion infrarouge $RIR_V$ telle que $RIR_V < 1.087 * TL_V$,
- une diminution de l'énergie transmise vers l'intérieur du bâtiment ou du véhicule (diminution du facteur solaire), et donc un échauffement moindre de ceux-ci,
- une limitation de l'échauffement du vitrage (diminution de l'absorption), un risque de casse plus faible et une diminution des besoins en trempe, à facteur solaire équivalent,
- des couleurs et esthétiques variées,
- une réflexion lumineuse extérieure atténuée, et donc un aspect moins réfléchissant vu de l'extérieur du bâtiment ou du véhicule, pour un niveau de transmission lumineuse et/ou une sélectivité donnés,
- une correction possible, grâce au substrat en verre coloré, de la couleur en réflexion extérieure créée par le revêtement, sans impact sur des propriétés comme la sélectivité par exemple,
- une dépendance angulaire de la couleur en réflexion extérieure moindre, et donc un aspect plus homogène de la couleur d'une façade d'un bâtiment ou des vitrages d'un véhicule quel que soit l'emplacement du vitrage au sein de la façade ou l'angle de montage de celui-ci dans le véhicule, et ce, sans impact sur des propriétés telle que la sélectivité.

Ces avantages sont d'autant plus intéressants pour des substrats en verre épais, pour lesquels, précédemment, l'absorption et l'énergie réémise vers l'intérieur du bâtiment ou du véhicule étaient d'autant plus grandes qu'ils étaient épais.

Ils le sont également pour des situations où le soleil est très haut dans le ciel et où le trajet de ses rayons à travers un vitrage en position relativement verticale est plus long.

De façon préférée le substrat selon l'invention est un verre caractérisé par une réflexion infrarouge $RIR_V$ telle que $RIR_V \geq 1.087 * TL_V + 5$, plus préférentiellement telle que $RIR_V \geq 1.087 * TL_V + 10$, et plus préférentiellement encore telle que $RIR_V \geq 1.087 * TL_V + 15$.

Alternativement, le substrat selon l'invention est un verre caractérisé par une réflexion infrarouge $RIR_V$ telle que $RIR_V \geq 1.141 * TL_V$, plus préférentiellement telle que $RIR_V \geq 1.196 * TL_V$, et plus préférentiellement encore telle que $RIR_V \geq 1.250 * TL_V$.

Alternativement encore, le substrat selon l'invention est un verre caractérisé par une réflexion infrarouge $RIR_V$ telle que $RIR_V \geq 1.033 * TL_V + 5$ ou telle que $RIR_V \geq 1.033 * TL_V + 10$ ou telle que $RIR_V \geq 1.033 * TL_V + 15$, alternativement telle que $RIR_V \geq 0.978 * TL_V + 10$ ou telle que $RIR_V \geq 0.978 * TL_V + 15$ ou telle que $RIR_V \geq 0.978 * TL_V + 20$, ou de façon alternative encore telle que $RIR_V \geq 0.924 * TL_V + 15$ ou telle que $RIR_V \geq 0.924 * TL_V + 20$ ou telle que $RIR_V \geq 0.870 * TL_V + 20$.

Avantageusement le substrat selon l'invention est un verre caractérisé par un transmission lumineuse $TL_V$ inférieure à 91%, 90%, 89%, 88%, 85%, 80%, 75%, 70% ou 50%. Avantageusement le substrat selon l'invention est un verre caractérisé par une réflexion infrarouge $RIR_V$ supérieure à 50%, 75%, 80%, 85%, 90%, 95%, 97%, 98% ou 99%. Les choix de $TL_V$ et $RIR_V$ au sein du domaine défini par l'invention varient principalement en fonction de la couleur du verre et sont liés à l'esthétique et aux propriétés énergétiques souhaitées pour le vitrage final.

Selon un mode alternatif avantageux, le substrat selon l'invention est un verre caractérisé par une réflexion infrarouge $RIR_V$ telle que $RIR_V \geq 0.510 * TL_V + 53$ ou telle que $RIR_V \geq 0.490 * TL_V + 55$, plus préférentiellement telle que $RIR_V \geq 0.435 * TL_V + 60$ ou telle que $RIR_V \geq 0.380 * TL_V + 65$, et plus préférentiellement encore telle que $RIR_V \geq 0.326 * TL_V + 70$.

De préférence, un substrat clair selon l'invention est un verre caractérisé par $TL_V > 85\%$ et $RIR_V > 98\%$, ou par $TL_V > 87\%$ et $RIR_V > 98.5\%$, ou encore par $TL_V > 88\%$ et $RIR_V > 99\%$.

De façon préférée, un substrat coloré selon l'invention est un verre caractérisé par $TL_V < 80\%$ et $RIR_V > 87\%$, ou par $TL_V < 70\%$ et $RIR_V > 80\%$, ou par $TL_V < 50\%$ et $RIR_V > 60\%$, ou encore par $TL_V < 30\%$ et $RIR_V > 40\%$, et ce, du plus clair au plus foncé.

Le substrat de verre selon l'invention est un verre de type silico-sodo-calcique, alumino-silicate, boro-silicate,... De manière préférée, la composition de base du verre comprend, en une teneur exprimée en pourcentages en poids total de verre :

| | |
|---|---|
| $SiO_2$ | 55 - 85% |
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20%. |

De manière toute préférée, la composition de base du verre comprend, en une teneur exprimée en pourcentages en poids total de verre :

| | |
|---|---|
| $SiO_2$ | 55 - 78% |
| $Al_2O_3$ | 0 - 18% |
| $B_2O_3$ | 0 - 18% |
| $Na_2O$ | 0 - 20% |
| CaO | 0 - 15% |
| MgO | 0 - 10% |
| $K_2O$ | 0 - 10% |
| BaO | 0 - 5% |

De manière la plus préférée et pour des raisons de coûts plus faibles de production, le substrat de verre selon l'invention est fait de verre silico-sodo-calcique. Avantageusement, selon ce mode de réalisation, la composition de base du verre comprend, en une teneur exprimée en pourcentages en poids total de verre :

| | |
|---|---|
| $SiO_2$ | 60 - 75% |
| $Al_2O_3$ | 0 - 6% |
| $B_2O_3$ | 0 - 4% |
| CaO | 0 - 15% |
| MgO | 0 - 10% |
| $Na_2O$ | 5 - 20% |
| $K_2O$ | 0 - 10% |
| BaO | 0 - 5%. |

En plus de sa composition de base, le verre peut comprendre d'autres composants, de nature et de quantité adaptées en fonction de l'effet recherché.

Une solution proposée dans l'invention pour obtenir un verre avec une réflexion dans les infrarouges $RIR_v$ très élevée consiste à utiliser dans la composition du verre du chrome, dans une gamme de teneurs spécifiques.

Ainsi, selon un premier mode de réalisation, le verre a avantageusement une composition qui comprend, en une teneur exprimée en pourcentages en poids total de verre:

| | |
|---|---|
| Fer total (exprimé sous forme de $Fe_2O_3$) | 0,002 - 0,06% |
| $Cr_2O_3$ | 0,0001 - 0,06 % |

De telles compositions de verre combinant un bas taux de fer et du chrome ont montré des performances particulièrement bonnes en terme de réflexion infrarouge $RIR_V$ et montrent une haute transparence dans le visible et une teinte très peu marquée, proche d'un verre dit « extra-clair ». Ces compositions sont décrites dans les demandes internationales WO2014128016A1, WO2014180679A1, WO2015011040A1, WO2015011041A1, WO2015011042A1, WO2015011043A1 et WO2015011044A1. Selon ce premier mode de réalisation particulier, la composition comprend préférentiellement une teneur en chrome (exprimée sous forme de $Cr_2O_3$) allant de 0,002 à 0,06 % en poids par rapport au poids total du verre. De telles teneurs en chrome permettent d'améliorer encore la réflexion infrarouge $RIR_v$.

Selon un deuxième mode de réalisation, le verre a une composition qui comprend, en une teneur exprimée en pourcentages en poids total de verre :

| | |
|---|---|
| Fer total (exprimé sous forme de $Fe_2O_3$) | 0,002 - 0,06% |
| $Cr_2O_3$ | 0,0015 - 1 % |
| Co | 0,0001- 1%. |

De telles compositions de verre à base de chrome et de cobalt ont montré des performances particulièrement bonnes en terme de réflexion infrarouge $RIR_v$, tout en offrant des possibilités intéressantes en terme d'esthétique/couleur (de la neutralité bleutée à une coloration intense voire jusqu'à l'opacité). De telles compositions sont décrites dans la demande de brevet européen n°13 198 454.4.

Selon un troisième mode de réalisation, le verre a une composition qui comprend, en une teneur exprimée en pourcentages en poids total de verre :

| | |
|---|---|
| Fer total (exprimé sous forme de $Fe_2O_3$) | 0,02 - 1% |
| $Cr_2O_3$ | 0,002 - 0,5% |
| Co | 0,0001 - 0,5% |

De préférence, selon ce mode de réalisation, la composition comprend : 0.06% < Fer total ≤ 1%.

De telles compositions à base de chrome et de cobalt permettent d'obtenir des feuilles de verre colorées dans la gamme bleu-vert, comparables en terme de couleurs et de transmission lumineuse aux verres bleus et verts proposés sur le marché, mais avec des performances particulièrement bonnes en terme de réflexion infrarouge. De telles compositions sont décrites dans la demande de brevet européen EP15172780.7.

Selon un quatrième mode de réalisation, la au moins première feuille de verre externe a une composition qui comprend, en une teneur exprimée en pourcentages en poids total de verre :

| | |
|---|---|
| Fer total (exprimé sous forme de $Fe_2O_3$) | 0,002 -1% |

(suite)

| | |
|---|---|
| Cr$_2$O$_3$ | 0,001 - 0,5% |
| Co | 0,0001 - 0,5% |
| Se | 0,0003 - 0,5% |

De telles compositions de verre à base de chrome, de cobalt et de sélénium ont montrés des performances particulièrement bonnes en terme de réflexion infrarouge, tout en offrant des possibilités intéressantes en terme d'esthétique/couleur (de la neutralité grise à une coloration légère à intense dans la gamme gris-bronze). De telles compositions sont décrites dans la demande de brevet européen EP15172779.9.

Alternativement au chrome, il est également proposé selon l'invention d'autres solutions utilisant un ou plusieurs composants dans des teneurs spécifiques, pour obtenir un verre avec une réflexion dans les infrarouges RIR$_V$ très élevée.

Selon un premier mode de réalisation alternatif, le verre a une composition qui comprend, en une teneur exprimée en pourcentages en poids total de verre :

| | |
|---|---|
| Fer total (exprimé sous forme de Fe$_2$O$_3$) | 0,002 - 0,06% |
| CeO$_2$ | 0,001 -1%. |

De telles compositions sont décrites dans la demande de brevet européen EP13193345.9.

Selon un autre mode de réalisation alternatif, le verre a une composition qui comprend, en une teneur exprimée en pourcentages en poids total de verre :

Fer total (exprimé sous forme de Fe$_2$O$_3$)    0,002 - 0,06% ;

et un des composants suivants :

- le manganèse (exprimé sous forme de MnO), en une teneur allant de 0,01 à 1% en poids;
- l'antimoine (exprimé sous forme de Sb$_2$O$_3$), en une teneur allant de 0,01 à 1% en poids;
- l'arsenic (exprimé sous forme de As$_2$O$_3$), en une teneur allant de 0,01 à 1% en poids,

ou

- le cuivre (exprimé sous forme de CuO), en une teneur allant de 0,0002 à 0,1% en poids.

De telles compositions sont décrites dans la demande de brevet européen EP14167942.3.

Selon encore un autre mode de réalisation alternatif, le verre a une composition qui comprend, en une teneur exprimée en pourcentages en poids total de verre :

Fer total (exprimé sous forme de Fe$_2$O$_3$)    0,002 - 0,04% ;

et au moins deux composants parmi le chrome, le sélénium, le cuivre, le cérium, le manganèse et l'antimoine; le chrome (exprimé sous forme de Cr$_2$O$_3$) étant en une teneur maximale de 0,02% en poids; le sélénium (exprimé sous forme de Se) étant en une teneur maximale de 0,08% en poids; le cuivre (exprimé sous forme de CuO) étant en une teneur maximale de 0,04% en poids; le cérium (exprimé sous forme de CeO$_2$) étant en une teneur maximale de 0,8% en poids; le manganèse (exprimé sous forme de MnO) étant en une teneur maximale de 1,6% en poids; l'antimoine (exprimé sous forme de Sb$_2$O$_3$) étant en une teneur maximale de 0,8% en poids; ladite composition répondant à la formule :

$$A \leq [\ 10{,}02*(Cr_2O_3/Fe_2O_3) + 4*(Se/Fe_2O_3) + 2{,}73*(CuO/Fe_2O_3) + 0{,}7*(CeO_2/Fe_2O_3) +$$
$$0{,}23*(MnO/Fe_2O_3) + 0{,}11*(Sb_2O_3/Fe_2O_3)\ ] ;$$

A étant égal à 0,30.

De telles compositions sont décrites dans la demande de brevet européen EP14177487.7.

Selon l'invention, la composition du substrat de verre présente un rédox inférieur à 10%, ou encore inférieur à 5% voire même inférieur à 3%. Le degré d'oxydation d'un verre est donné par son rédox, défini ici comme le rapport en poids d'atome de Fe$^{2+}$ par rapport au poids total des atomes de fer présents dans le verre, Fe$^{2+}$/Fe total. De manière équivalente, le rédox peut également être calculé en exprimant les poids de fer ferreux ($Fe^{2+}$) et de fer total sous forme $Fe_2O_3$. Alternativement, le rédox est parfois exprimé comme le rapport en poids du fer ferreux ($Fe^{2+}$) exprimé sous forme FeO et du fer total exprimé sous forme $Fe_2O_3$. Dans ce cas, la relation suivante permet de passer d'une expression à l'autre :

$$\frac{Fe^{2+} sous\ forme\ Fe}{Fe_{Total}\ sous\ forme\ Fe} = \frac{Fe^{2+} sous\ forme\ Fe_2O_3}{Fe_{Total}\ sous\ forme\ Fe_2O_3} = 1.1113 * \frac{Fe^{2+} sous\ forme\ FeO}{Fe_{Total}\ sous\ forme\ Fe_2O_3}$$

La couche réfléchissant les infrarouges selon l'invention peut de préférence être caractérisée par une transmission lumineuse $TL_C$ telle que $TL_C \geq 1.35 * TIR_C$, $TL_C \geq 1.4 * TIR_C$, ou $TL_C \geq 1.5 * TIR_C$, de façon plus préférée telle que $TL_C \geq 1.75 * TIR_C$, $TL_C \geq 1.9 * TIR_C$, ou $TL_C \geq 1.95 * TIR_C$, et plus préférentiellement encore $TL_C \geq 2 * TIR_C$.

La couche peut avantageusement se caractériser par une réflexion infrarouge $RIR_C$ supérieure à $0.5 * (1-AIR_C)$ ou supérieure à $0.6 * (1-AIR_C)$, ou de façon plus préférée encore supérieure à $0.76 * (1-AIR_C)$ ou supérieure à $0.86 * (1-AIR_C)$ ou supérieure à $0.9 * (1-AIR_C)$ ou supérieure à $0.95 * (1-AIR_C)$ ou supérieure à $0.96 * (1-AIR_C)$ ou supérieure à $0.97 * (1-AIR_C)$ ou supérieure à $0.98 * (1-AIR_C)$ ou supérieure à $0.99 * (1-AIR_C)$.

Dans la gamme $RIR_C > 0.5 * (1-AIR_C)$ et $RIR_C \geq 0.76 * (1-AIR_C)$, le facteur solaire n'est pas nécessairement diminué dans tous les cas de figure par rapport à la situation où un substrat en verre de l'art antérieur de même $TL_V$ est utilisé. Mais cette gamme reste utile dans des situations où les différences de température et/ou d'écoulement d'air sont favorables à un transfert thermique vers l'intérieur du bâtiment ou du véhicule.

Dans la gamme $RIR_C > 0.76 * (1-AIR_C)$, le facteur solaire est plus bas que lorsqu'un substrat en verre de l'art antérieur de même $TL_V$ est utilisé, diminuant ainsi l'énergie transmise vers l'intérieur et augmentant la sélectivité du vitrage.

Dans ces deux gammes, les autres avantages selon l'invention sont présents, comme la limitation de l'échauffement du vitrage, les couleurs et esthétiques variées, la réflexion lumineuse extérieure atténuée, la correction de la couleur en réflexion extérieure, et/ou la dépendance angulaire de la couleur en réflexion extérieure moindre.

Alternativement, il peut être avantageux d'utiliser en combinaison avec le verre selon l'invention, une couche ayant une $TIR_C$ inférieure à 50, 40, 35, 30, 25, 20, 15, 10, 5, 4, 3, 2 ou 1 %.

Avantageusement la couche réfléchissant les infrarouges utilisée pour ces applications est un empilage multicouche comprenant n couche(s) fonctionnelle(s) à base d'un matériau réfléchissant le rayonnement infrarouge, avec $n \geq 1$, et n+1 revêtements diélectriques de telle sorte que chaque couche fonctionnelle est entourée par des revêtements diélectriques.

Les couches fonctionnelles faisant partie des couches réfléchissant les infrarouges sont avantageusement formées à partir de métal noble. Elles peuvent être à base d'argent, d'or, de palladium, de platine ou leur mélange ou alliage, mais aussi à base de cuivre ou d'aluminium, seul, en alliage ou en alliage avec un ou plusieurs des métaux nobles. De préférence, toutes les couches fonctionnelles sont à base d'argent. C'est un métal noble qui présente une très grande efficacité de réflexion du rayonnement infrarouge. Il est mis en œuvre aisément dans un dispositif magnétron et son prix de revient n'est pas prohibitif, surtout eu égard à son efficacité. Avantageusement, l'argent est dopé avec quelques pourcents de palladium, d'aluminium ou de cuivre, à raison par exemple de 1 à 10% massique, ou on peut utiliser un alliage d'argent.

Les revêtements diélectriques, transparents, faisant partie des couches réfléchissant les infrarouges, sont bien connus dans le domaine des couches déposées par pulvérisation cathodique. Les matières adéquates sont nombreuses et il n'est pas utile d'en faire la liste complète ici. Ce sont en général des oxydes, oxy-nitrures ou nitrures métalliques. Parmi les plus courantes, on peut citer à titre d'exemple $SiO_2$, $TiO_2$, $SnO_2$, ZnO, ZnAlOx, $Si_3N_4$, AlN, $Al_2O_3$, $ZrO_2$, $Nb_2O_5$, $YO_x$ $TiZrYO_x$, $TiNbO_x$, $HfO_x$, $MgO_x$, $TaO_x$, $CrO_x$ et $Bi_2O_3$, et leurs mélanges. On peut également citer les matériaux suivants : AZO, ZTO, GZO, $NiCrO_x$, TXO, ZSO, TZO, TNO, TZSO, TZAO et TZAYO. L'expression AZO se rapporte à un oxyde de zinc dopé avec de l'aluminium ou à un oxyde mixte de zinc et d'aluminium, obtenu de préférence à partir d'une cible céramique formée par l'oxyde à déposer, pulvérisée soit en atmosphère neutre ou légèrement oxydante. De même, les expressions ZTO ou GZO se rapportent respectivement à des oxydes mixtes de titane et de zinc ou de zinc et de gallium, obtenus à partir de cibles céramiques, soit en atmosphère neutre ou légèrement oxydante. L'expression TXO se rapporte à de l'oxyde de titane obtenu à partir d'une cible céramique d'oxyde de titane. L'expression ZSO se rapporte à un oxyde mixte zinc-étain obtenu soit à partir d'une cible métallique de l'alliage déposé sous atmosphère oxydante ou à partir d'une cible céramique de l'oxyde correspondant, soit en atmosphère neutre ou légèrement oxydante. Les expressions TZO, TNO, TZSO, TZAO ou TZAYO se rapportent respectivement à des oxydes mixtes titane-zirconium, titane-niobium, titane-zirconium-étain, titane-zirconium-aluminium ou titane-zirconium-aluminium-yttrium, obtenus à partir de cibles céramiques, soit en atmosphère neutre ou légèrement oxydante. Tous ces matériaux cités ci-avant peuvent être utilisés pour former les revêtements diélectriques utilisés dans la présente invention.

De préférence, le revêtement diélectrique disposé sous une ou sous chaque couche fonctionnelle comprend, en contact direct avec la ou les couches fonctionnelles, une couche à base d'un oxyde de zinc, éventuellement dopé par exemple à l'aluminium ou au gallium, ou en alliage avec de l'oxyde d'étain. L'oxyde de zinc peut avoir un effet particulièrement favorable sur la stabilité et la résistance à la corrosion de la couche fonctionnelle, notamment lorsqu'il s'agit d'argent. Il est également favorable à l'amélioration de la conductibilité électrique d'une couche à base d'argent, et donc à l'obtention d'une faible émissivité.

Les différentes couches de l'empilage sont, par exemple, déposées par pulvérisation cathodique sous pression réduite assistée par champ magnétique, dans un dispositif bien connu de type magnétron. La présente invention n'est toutefois pas limitée à ce procédé particulier de dépôt de couche.

Les vitrages feuilletés selon l'invention comprennent au moins un substrat transparent tel que décrit ci-dessus assemblé à une feuille de matière vitreuse par l'intermédiaire d'une matière plastique adhésive, généralement du PVB. Ils peuvent être utilisés comme vitrages d'un bâtiment ou d'un véhicule automobile. Dans le domaine des vitrages automobiles, ils peuvent être utilisés par exemple en tant que pare-brise mais également pour les autres vitres du véhicule telles les vitres latérales, toits ou lunettes arrières.

Les vitrages feuilletés selon l'invention peuvent être utilisés en tant que vitrages simples ou assemblés en vitrages multiples tels que des vitrages doubles ou triples dans lesquels le vitrage feuilleté est associée à une ou plusieurs autres feuilles de verre, pourvues ou non de revêtement, le vitrage feuilleté se trouvant le plus à l'extérieur de la structure multiple. Le vitrage feuilleté est ainsi positionné de telle sorte que, lorsqu'il est monté sur un bâtiment ou un véhicule, le rayonnement solaire frappe d'abord la feuille de verre revêtue du côté dépourvu de couche, puis la couche réfléchissant les infrarouges, puis la feuille intercalaire adhésive, puis la seconde feuille de verre, et puis éventuellement une autre feuille de verre s'il s'agit d'un double vitrage. La couche réfléchissant les infrarouges se trouve donc, selon la convention généralement utilisée, en position 2. C'est dans cette position que la protection solaire est la plus efficace.

A titre d'exemples, des modes de réalisation particuliers de l'invention vont à présent être décrits, en faisant référence aux exemples 1 à 18 selon l'invention et aux exemples comparatifs C1-C24 hors invention.

Les principales caractéristiques des verres utilisés dans les exemples et exemples comparatifs sont données dans la Table Ia. Leurs compositions, outre le $SiO_2$, sont données à la Table Ib en pourcentages poids. La Table II quant à elle décrit des couches réfléchissant les infrarouges selon l'invention, répondant à la relation $TL_C \geq 1.3 * TIR_C$, tandis que la Table III donne un exemple (dit comparatif) d'une couche réfléchissant les infrarouges, sélective, mais ne répondant pas à la relation $TL_C \geq 1.3 * TIR_C$.

Dans les Tables II et III,

- ZSO5 représente un oxyde mixte zinc-étain, dans lequel la proportion zinc-étain est proche de 50-50% en poids ($Zn_2SnO_4$),
- SiN représente un nitrure de silicium,
- TZO représente un oxyde mixte titane-zirconium, dans lequel la proportion d'oxyde de titane et d'oxyde de zirconium est proche de 65-35% en poids.

**TABLE Ia**

| Type de verre | $RIR_V$ (ISO9050) | $TL_{V(C,2)}$ | a* (D,10) | b* (D,10) |
|---|---|---|---|---|
| comp-clair | 76.8 | 89.7 | -0.9 | 0.2 |
| comp-extraclair | 95.4 | 91.5 | -0.1 | 0.1 |
| inv-clair | 99.2 | 89.9 | -0.9 | 0.6 |
| | | | | |
| comp-vert | 17.7 | 78.5 | -6.1 | 1.2 |
| inv-vert | 97.1 | 75.5 | -5.4 | 0.4 |
| comp-vert foncé | 11 | 72.7 | -8.3 | 2 |
| inv-vert foncé | 96.8 | 71.1 | -7.3 | 1.4 |
| comp-vert 'privacy' | 5 | 34.3 | -16.6 | 0.4 |
| inv-vert 'privacy' | 91 | 41 | -16.1 | -1.1 |
| | | | | |
| inv-bleu | 96 | 77.2 | -3 | -2.9 |
| comp-bleu foncé | 18.4 | 66.7 | -6.6 | -8.1 |
| inv-bleu foncé | 95.1 | 64.2 | -5.4 | -8.3 |

(suite)

| Type de verre | $RIR_V$ (ISO9050) | $TL_{V(C,2)}$ | a* (D,10) | b* (D,10) |
|---|---|---|---|---|
| comp-bleu 'privacy' | 6.7 | 46.5 | -12.7 | -11.8 |
| inv-bleu 'privacy' | 90.4 | 42 | -10.6 | -12.2 |
| | | | | |
| comp-gris clair | 35.7 | 70.1 | -1.1 | 0 |
| inv-gris clair | 97.1 | 70.1 | 0 | 0 |
| comp-gris | 42.7 | 55.7 | 0.9 | -2.1 |
| inv-gris | 95.2 | 55.9 | -1.4 | -1.9 |
| comp-gris 'privacy' | 7.7 | 17.4 | -1 | -0.1 |
| inv-gris 'privacy' | 87.3 | 17.3 | 1.2 | -0.9 |
| | | | | |
| comp-bronze | 45.9 | 61 | 2.8 | 4.4 |
| inv- bronze | 96.6 | 58 | 2.6 | 4.3 |

**TABLE Ib**

| Type de verre | CaO (%) | K₂O (%) | Na20 (%) | Fe203 (%) | SO3 (%) | TiO2 (%) | Al2O3 (%) | MgO (%) | zrO2 (ppm) | MnO (ppm) | BaO (ppm) | Co (ppm) | Se (ppm) | cr2O3 (ppm) | V2O5 (ppm) | Ni (ppm) |
|---|---|---|---|---|---|---|---|---|---|---|---|---|---|---|---|---|
| comp-clair | 8.700 | 0.130 | 13.830 | 0.085 | 0.260 | 0.045 | 0.880 | 4.320 | 40 | 200 | 40 | | | | | |
| comp-extraclair | 9.090 | 0.024 | 13.930 | 0.011 | 0.230 | 0.017 | 0.721 | 4.320 | 28 | | | 0.25 | | | | |
| inv-clair | 7.910 | 0.018 | 13.830 | 0.009 | 0.341 | <0.016 | 1.338 | 4.460 | 45 | <10 | | 4.000 | | 46 | | |
| comp-vert | 8.990 | 0.148 | 13.650 | 0.595 | 0.186 | 0.049 | 0.803 | 4.080 | 74 | 201 | 38 | | | | | |
| inv-vert | 8.000 | 0.200 | 13.500 | 0.049 | 0.300 | | 1.000 | 4.500 | | | | 29 | | 330 | | |
| comp-vert foncé | 8.440 | 0.143 | 13.880 | 0.832 | 0.153 | 0.048 | 0.931 | 4.150 | 49 | 191 | 46 | | | | 14 | |
| inv-vert foncé | 8.000 | 0.200 | 13.500 | 0.069 | 0.300 | | 1.000 | 4.500 | | | | 36 | | 470 | | |
| comp-vert 'privacy' | 8.330 | 0.157 | 13.700 | 1.552 | 0.136 | 0.048 | 0.928 | 4.020 | 53 | 202 | 49 | 79 | | 214 | 425 | |
| inv-vert 'privacy' | 8.000 | 0.200 | 13.500 | 0.069 | 0.300 | | 1.000 | 4.500 | | | | 128 | | 1370 | | |
| inv-bleu | 8.000 | 0.200 | 13.500 | 0.0086 | 0.352 | | 1.000 | 4.500 | | | | 41 | | 65 | | |
| comp-bleu foncé | 8.490 | 0.109 | 13.700 | 0.481 | 0.093 | 0.050 | 0.868 | 4.190 | 47 | 224 | 49 | 44 | <3 | 24 | | |
| inv-bleu foncé | 8.000 | 0.200 | 13.500 | 0.043 | 0.300 | | 1.000 | 4.500 | | | | 73 | | 287.7 | | |
| comp-bleu 'privacy' | 8.460 | 0.134 | 13.820 | 0.822 | 0.070 | 0.052 | 0.951 | 4.170 | 48 | 230 | 55 | 90 | | 205 | | |
| inv-bleu 'privacy' | 8.000 | 0.200 | 13.500 | 0.042 | 0.300 | | 1.000 | 4.500 | | | | 152 | | 840 | | |
| comp-gris clair | 8.910 | 0.072 | 13.930 | 0.330 | 0.164 | 0.011 | 0.126 | 3.700 | 31 | 39 | <21 | 23 | 7 | <6 | | |
| inv-gris clair | 8.000 | 0.200 | 13.500 | 0.075 | 0.300 | | 1.000 | 4.500 | | | | 36 | 74 | 111 | | |
| comp-gris | 8.800 | 0.219 | 13.770 | 0.346 | 0.308 | 0.031 | 0.865 | 4.180 | 44 | 120 | | 64 | 20 | | | 17 |
| inv-gris | 8.000 | 0.200 | 13.500 | 0.043 | 0.300 | | 1.000 | 4.500 | | | | 69.9 | 200 | 287.8 | | |

(suite)

| Type de verre | CaO (%) | K₂O (%) | Na20 (%) | Fe203 (%) | SO3 (%) | TiO2 (%) | Al2O3 (%) | MgO (%) | zrO2 (ppm) | MnO (ppm) | BaO (ppm) | Co (ppm) | Se (ppm) | cr2O3 (ppm) | V2O5 (ppm) | Ni (ppm) |
|---|---|---|---|---|---|---|---|---|---|---|---|---|---|---|---|---|
| comp-gris 'privacy' | 8.520 | 0.232 | 13.700 | 0.371 | 0.153 | 0.047 | 1.008 | 4.180 | 50 | 191 | 56 | 15 | | | | |
| inv-gris 'privacy' | 8.000 | 0.200 | 13.500 | 0.067 | 0.300 | | 1.000 | 4.500 | | | | | 215 | 560 | 800 | |
| comp-bronze | 8.880 | 0.122 | 13.540 | 0.313 | 0.250 | 0.037 | 0.670 | 4.240 | 41 | 216 | 52 | 30 | 27 | 33 | | |
| inv-bronze | 8.000 | 0.200 | 13.500 | 0.040 | 0.300 | | 1.000 | 4.500 | | | | 44.9 | 340.8 | 200 | | |

**TABLE II**

| A | RIRc>0.86*(1-AIRc) | | | | ZSO5 | ZnO | Ag | Ti | ZSO5 | ZnO | Ag | Ti | ZSO5 | ZnO | Ag | Ti | ZSO5 | Ti |
|---|---|---|---|---|---|---|---|---|---|---|---|---|---|---|---|---|---|---|
| | | | | | 385 Å | | 142 Å | 55 Å | 745 Å | | 146 Å | 60 Å | 710 Å | | 133 Å | 50 Å | 290 Å | 50 Å |
| B | $TL_C$ | $TIR_C$ | $RIR_C$ | $AIR_C$ | ZSO5 | ZnO | Ag | Ti | ZSO5 | ZnO | Ag | Ti | ZSO5 | Ti | | | | |
| | 79.6 | 17.2 | 74.2 | 8.6 | 29C Å | | 120 Å | 60 Å | 950 Å | | 94 Å | 53 Å | 180 Å | 50 Å | | | | |
| C | $TL_C$ | $TIR_C$ | $RIR_C$ | $AIR_C$ | SiN | NiCr | Ag | NiCr | SiN | | | | | | | | | |
| | 25.7 | 9.9 | 61.1 | 29 | 588 Å | 36 Å | 165 Å | 67 Å | 500 Å | | | | | | | | | |
| D | TLc | $TIR_C$ | $RIR_C$ | $AIR_C$ | $TiO_2$ | ZnO | Ag | $TiO_2$ | ZnO | TZO | | | | | | | | |
| | 88.8 | 37.2 | 57 | 5.8 | 180 Å | | 118 Å | 30 Å | 445 Å | | | | | | | | | |

**TABLE III**

| Z | TL$_C$ | TIR$_C$ | RIR$_C$ | AIR$_C$ | SnO2 | TZO |
|---|---|---|---|---|---|---|
| | 68.7 | 82.5 | 17.5 | 0 | 150 Å | 420 Å |

Dans les tableaux qui suivent, sauf indication contraire, les mesures sont données pour des vitrages feuilletés comprenant depuis l'extérieur un premier verre-substrat revêtu (couche en position 2) de 6 mm d'épaisseur (sauf pour les exemples comparatifs C1, C2, C3, où l'épaisseur est de 8 mm), un film de PVB de 0.76 mm d'épaisseur, et un second verre dit "mid-iron" de 4 mm d'épaisseur. Les propriétés de transmission lumineuse (TL), réflexion lumineuse (RL), facteur solaire (FS), sélectivité (select=TL/FS), absorption (Abs), sauf indication contraire, sont données selon la norme ISO9050:2003, sous illuminant D, 2°. Les couleurs L*, a*, b* sont données selon le modèle CIE Lab défini en 1976 par la Commission internationale de l'éclairage (CIE), sous illuminant D, 10°, en transmission (T) et en réflexion (R). L'absorption (Abs) est l'absorption énergétique du vitrage feuilleté complet.

**Tableau A**

| ex. | Substrat | Couche | TL D2° | L* D10T | a* D10T | b* D10T | RL D2° | L* D10R | a* D10 R | b* C10R | Abs | FS | Select TL/FS |
|---|---|---|---|---|---|---|---|---|---|---|---|---|---|
| 1 | inv-gris. clair | A | 43.2 | 74.8 | -0.5 | 2.9 | 7.4 | 32.6 | -2.1 | -0.3 | 70.2 | 30.4 | 1.6 |
| C1 | comp-gris clair | A | 49 | 75.3 | -4.4 | 4.3 | 7.5 | 32.9 | -4.3 | 0.6 | 72.8 | 38.3 | 1.3 |
| 2 | inv-gris clair | B | 52.9 | 77.6 | 0.2 | 2.4 | 7.3 | 32.5 | -3.2 | -1.5 | 58.8 | 41.6 | 1.3 |
| C2 | comp-gris clair | B | 53.7 | 78.1 | -3.9 | 3.9 | 7.4 | 32.8 | -5.1 | -0.7 | 68.6 | 41.7 | 1.3 |
| 3 | inv-gris. clair | C | 16.6 | 47.6 | -2.1 | 3.9 | 19.1 | 50.8 | 0.9 | -5A | 68.8 | 24.8 | 0.7 |
| C3 | comp-gris clair | C | 16.8 | 47.9 | -5 | 4.9 | 19.6 | 51.4 | -3.8 | -3.5 | 72.7 | 28.2 | 0.6 |
| 4 | inv-vert | A | 53.8 | 78.2 | -7.4 | 3.4 | 8.3 | 34.5 | -5.5 | 0.3 | 68 | 31.5 | 1.7 |
| C4 | comp-vert | A | 57.1 | 80.2 | -8.1 | 4.3 | 8.7 | 35.3 | -7.3 | 1.5 | 68.4 | 40.4 | 1.4 |
| 5 | inv-vert | B | 59 | 81.2 | -6.8 | 2.9 | 8.1 | 34.3 | -6.8 | -1.1 | 56.8 | 42.5 | 1.4 |
| C5 | comp-vert | B | 62.5 | 83.2 | -7.7 | 3.9 | 8.6 | 35.3 | -8.2 | -0.8 | 63.4 | 44.5 | 1.4 |
| 6 | inv-vert | C | 18.5 | 50 | -7.1 | 4.4 | 22.9 | 55.1 | -7.1 | -5.1 | 54.7 | 25.0 | 0.7 |
| C6 | comp-vert | C | 19.7 | 51.4 | -7.8 | 5 | 25.2 | 57.5 | -9.2 | -3.8 | 65.8 | 28.5 | 0.7 |
| 7 | inv-vert | D | 60.3 | 82 | -9.3 | 0.2 | 9.2 | 36.2 | -0.9 | 4.9 | 45.6 | 51.5 | 1.2 |
| C7 | comp-vert | D | 63.9 | 84 | -10.5 | 1.2 | 9.8 | 37.3 | -1.2 | 5.6 | 59.2 | 46.6 | 1.4 |
| 8 | inv-vert 'privacy' | A | 22.5 | 54.3 | -18.5 | 1.6 | 5.1 | 27 | -2.2 | -0.7 | 84.9 | 23.1 | 1.0 |
| C8 | comp-vert 'privacy' | A | 17.2 | 48.6 | -18.5 | 2.5 | 4.7 | 25.9 | -2.1 | 0 | 89 | 29.3 | 0.6 |
| 9 | inv-vert 'privacy' | B | 24.6 | 56.5 | -18.4 | 1 | 5 | 26.8 | -2.9 | -0.4 | 76.4 | 31.4 | 0.8 |
| C9 | comp-vert 'privacy' | B | 18.8 | 50.6 | -18.8 | 2.2 | 4.7 | 25.9 | -2.2 | -0.4 | 88.1 | 30,0 | 0.6 |
| 10 | inv-vert 'privacy' | C | 7.7 | 33.3 | -14.3 | 2.7 | 7.8 | 33.6 | -7.4 | -2.7 | 85 | 23.8 | 0.3 |
| C19 | comp-vert 'privacy' | C | 5.9 | 29.2 | -14.4 | 3 | 6.3 | 30.3 | -6.9 | -1 | 91.5 | 26.2 | 0.2 |
| 11 | inv-bleu foncé | A | 42.5 | 71.4 | -7.1 | -7.7 | 6.8 | 31.5 | -2.7 | -4.8 | 72.9 | 29.3 | 1.5 |
| C11 | comp-bleu foncé | A | 44.9 | 73.2 | -8.6 | -7.5 | 7.1 | 32.1 | -4.4 | -4.3 | 73.5 | 37.8 | 1.2 |
| 12 | inv-bleu foncé | B | 46.6 | 74.2 | -6.6 | -8.5 | 6.8 | 31.5 | -4.3 | -5.6 | 62 | 39.9 | 1.2 |
| C12 | camp-bleu foncé | B | 49.2 | 75.9 | -8.2 | -8.3 | 7 | 32.2 | -5.6 | -5.9 | 68.7 | 41.8 | 1.2 |
| 13 | inv-bleu foncé | C | 14.6 | 45.2 | -6.9 | -3.4 | 16.1 | 47.6 | -3.5 | -17.3 | 72.7 | 24.7 | 0.6 |
| C13 | comp-bleu foncé | C | 15.4 | 46.4 | -5.1 | -3.4 | 17.5 | 49.6 | -6.1 | -17.4 | 74.7 | 28.2 | 0.5 |
| 14 | inv-bleu foncé | D | 47.7 | 75 | -8.6 | -11.2 | 7.3 | 32.6 | -1.1 | -1.1 | 51.6 | 48.9 | 1,0 |
| C14 | comp-bleu foncé | D | 50.5 | 76.8 | -10.4 | -11.1 | 7.7 | 33.3 | -1.9 | -1.1 | 65 | 44,0 | 1.1 |
| 15 | inv-gris'privacy' | A | 6.3 | 29.8 | 0.4 | 1 | 4.3 | 24.7 | 0.1 | -0.6 | 91.1 | 19.6 | 0.3 |
| C15 | comp-gris 'privacy' | A | 6.3 | 30 | -1.5 | 1.5 | 4.3 | 24.7 | -0.1 | -0.5 | 92.8 | 26.8 | 0.2 |
| 16 | inv-gris'privacy' | B | 6.9 | 31.2 | 1 | 0.6 | 4.3 | 24.7 | 0 | -05 | 83.1 | 27.4 | 0.3 |
| C16 | comp-gris 'privacy' | B | 6.9 | 31.4 | -1.1 | 1.3 | 4.3 | 24.7 | -0.1 | -0.5 | 91.5 | 27.7 | 0.2 |

(suite)

| ex. | Substrat | Couche | TL D2° | L* D10T | a* D10T | b* D10T | RL D2° | L* D10R | a* D10 R | b* C10R | Abs | FS | Select TL/FS |
|---|---|---|---|---|---|---|---|---|---|---|---|---|---|
| 17 | inv-gris'privacy' | C | 2.2 | 16 | -0.5 | 1.8 | 4.5 | 25.4 | 0.3 | -0.9 | 90.2 | 23.0 | 0.1 |
| C17 | comp-gris 'privacy' | C | 2.2 | 16.2 | -1.9 | 2.1 | 4.5 | 25.3 | -0.1 | -0.7 | 94.1 | 25.6 | 0.1 |
| 18 | inv-gris'privacy' | D | 7 | 31.6 | 0.3 | -0.9 | 4.3 | 24.8 | 0.1 | -0.4 | 74.6 | 35.2 | 0.2 |
| C18 | comp-gris privacy' | D | 7.1 | 31.8 | -2.1 | -0.2 | 4.3 | 24.8 | 0 | -0.4 | 90.7 | 28.3 | 0.3 |

**Tableau B**

| ex. | Substrat | Couche | TL D2$^n$ | L* D10T | a* D10T | b* D10T | LR D2° | L* D10R | a* D10R | b* D10R | Abs | FS | Select TL/FS |
|---|---|---|---|---|---|---|---|---|---|---|---|---|---|
| C19 | inv-vert | Z | 58.9 | 81.1 | -7 | 3.6 | 14.2 | 44.7 | -6.9 | -2.9 | 20.9 | 70.5 | 0.8 |
| C20 | comp-vert | Z | 62.5 | 83.1 | -7.5 | 4.6 | 15.4 | 46.4 | -8.5 | -2 | 48.8 | 50,0 | 1.3 |
| C21 | inv-bleu foncé | Z | 46.5 | 74.1 | -6.8 | -7.9 | 10.6 | 39.3 | -3.9 | -11.6 | 28.9 | 67.6 | 0.7 |
| C22 | comp-bleu foncé | Z | 49.1 | 75.9 | -8.4 | -7.7 | 11.4 | 40.7 | -5.8 | -11.8 | 56.4 | 47.6 | 1,0 |
| C23 | inv-gris 'privacy' | z | 6.9 | 31.2 | 1.2 | 0.9 | 4.4 | 25 | 0.1 | -0.7 | 56.1 | 53,0 | 0.1 |
| C24 | comp-gris 'privacy' | Z | 6.9 | 31.4 | -1.1 | 1.6 | 4.4 | 2.5 | -0.1 | -0.6 | 88.8 | 29.7 | 0.2 |

Exemples 1 à 18 et exemples comparatifs C1 à C18

Différentes couches conformes à l'invention ont été combinées avec différents verres, dont certains, non-conformes à l'invention (notés comp-), ont une réflexion infrarouge $RIR_V$ inférieure à 1.087 fois leur transmission lumineuse $TL_V$, et d'autres, conformes à l'invention (notés inv-), ont une réflexion infrarouge $RIR_V$ supérieure ou égale à 1.087 fois leur transmission lumineuse $TL_V$. Les valeurs simulées de transmission et réflexion lumineuses, de couleurs en transmission et en réflexion, facteur solaire, sélectivité et absorption du vitrage feuilleté sont données dans le Tableau A.

Ces résultats montrent que l'utilisation combinée d'un verre ayant une réflexion infrarouge telle que $RIR_V \geq$ 1.087 * $TL_V$ et d'une couche répondant à la relation $TL_C \geq 1.3$ * $TIR_C$ apporte, à TL équivalente, une diminution du facteur solaire, ou à tout le moins un facteur solaire similaire ou peu augmenté, en même temps qu'une absorption moindre. Ces combinaisons peuvent donc avantageusement être utilisées pour des vitrages de contrôle solaire ou anti-solaires.

Les exemples incluant les couches A, B, ou C, montrent que l'utilisation combinée d'un verre ayant une réflexion infrarouge telle que $RIR_V \geq 1.087$ * $TL_V$ et d'une couche répondant à la relation $TL_C \geq 0.76$ * $TIR_C$ apporte, à TL équivalente, une diminution du facteur solaire en même temps qu'une absorption moindre, et ce dans tous les cas de figures.

Les exemples incluant la couche D montrent d'autre part que l'utilisation combinée d'un verre ayant une réflexion infrarouge telle que $RIR_V \geq 1.087$ * $TL_V$ et d'une couche caractérisée par une réflexion infrarouge $RIR_C$ dans la gamme $RIR_C > 0.5$ * $(1-AIR_C)$ et $RIR_C \leq 0.76$ * $(1-AIR_C)$ n'apporte, à TL équivalente, qu'une faible augmentation du facteur solaire (de l'ordre de maximum 5%), acceptable dans certaines circonstances, mais toujours avec le bénéfice d'une absorption moindre.

Exemples comparatifs C19 à C24

Une couche non-conforme à l'invention a été combinée avec différents verres, dont certains, non-conformes à l'invention (notés comp-), et d'autres, conformes à l'invention (notés inv-). Les valeurs simulées de transmission et réflexion lumineuses, de couleurs en transmission et en réflexion, facteur solaire, sélectivité et absorption du vitrage feuilleté sont données dans le Tableau B.

Ces exemples comparatifs montrent que l'utilisation combinée d'un verre ayant une réflexion infrarouge telle que $RIR_V \geq 1.087$ * $TL_V$ et d'une couche ne répondant pas à la relation $TL_C \geq 1.3$ * $TIR_C$ apporte, à TL équivalente, une nette augmentation du facteur solaire (de l'ordre de 20%) et une sélectivité clairement diminuée, ce qui ne les rend pas adaptés à des applications de contrôle solaire.

**Revendications**

1. Vitrage feuilleté comprenant, assemblé à une feuille de matière vitreuse par l'intermédiaire d'une matière plastique adhésive, un substrat transparent revêtu d'une couche réfléchissant les infrarouges, **caractérisé en ce que** le substrat est un verre de type silico-sodo-calcique ou aluminosilicate ou boro-silicate, dont la composition présente un rédox inférieur à 10%, **caractérisé par** une réflexion infrarouge $RIR_V$ entre 780 et 2500 nm, définie pour un substrat de verre de 4 mm d'épaisseur, telle que $RIR_V \geq 1.087$ * $TL_V$, $TL_V$ étant la transmission lumineuse du verre entre 380 et 780 nm, définie pour un verre de 4 mm d'épaisseur, et **en ce que** la couche réfléchissant les infrarouges est **caractérisée par** une transmission lumineuse $TL_C$ entre 380 et 780 nm telle que $TL_C \geq 1.3$ * $TIR_C$, $TIR_C$ étant la transmission infrarouge de la couche entre 780 et 2500 nm.

2. Vitrage feuilleté selon la revendication 1, **caractérisé en ce que** le substrat est un verre **caractérisé par** une réflexion infrarouge $RIR_V$ telle que $RIR_V \geq 1.087$ * $TL_V + 5$.

3. Vitrage feuilleté selon la revendication 1 ou la revendication 2, **caractérisé en ce que** le substrat est un verre **caractérisé par** une réflexion infrarouge $RIR_V$ telle que $RIR_V \geq 0.510$ * $TL_V + 53$.

4. Vitrage feuilleté selon l'une quelconque des revendications précédentes, **caractérisé en ce que** le verre du substrat a une composition qui comprend, en une teneur exprimée en pourcentages en poids total de verre :

Fer total (exprimé sous forme de $Fe_2O_3$)     0,002 - 0,06%

(suite)

| Cr$_2$O$_3$ | 0,0001 - 0,06 %. |

**5.** Vitrage feuilleté selon l'une quelconque des revendications 1 à 3, **caractérisé en ce que** le verre du substrat a une composition qui comprend, en une teneur exprimée en pourcentages en poids total de verre :

| Fer total (exprimé sous forme de Fe$_2$O$_3$) | 0,002 - 0,06% |
| Cr$_2$O$_3$ | 0,0015 - 1 % |
| Co | 0,0001 -1%. |

**6.** Vitrage feuilleté selon l'une quelconque des revendications 1 à 3, **caractérisé en ce que** le verre du substrat a une composition qui comprend, en une teneur exprimée en pourcentages en poids total de verre :

| Fer total (exprimé sous forme de Fe$_2$O$_3$) | 0,02 - 1% |
| Cr$_2$O$_3$ | 0,002 - 0,5% |
| Co | 0,0001 - 0,5%. |

**7.** Vitrage feuilleté selon l'une quelconque des revendications 1 à 3, **caractérisé en ce que** le verre du substrat a une composition qui comprend, en une teneur exprimée en pourcentages en poids total de verre :

| Fer total (exprimé sous forme de Fe$_2$O$_3$) | 0,002 - 1% |
| Cr$_2$O$_3$ | 0,0010 - 0,5% |
| Co | 0,0001 - 0,5%. |
| Se | 0,0003 - 0,5%. |

**8.** Vitrage feuilleté selon l'une quelconque des revendications précédentes, **caractérisé en ce que** la couche réfléchissant les infrarouges est **caractérisée par** une réflexion infrarouge $RIR_C$ supérieure à 0.5 * (1-AIR$_C$).

**9.** Vitrage feuilleté selon l'une quelconque des revendications précédentes, **caractérisé en ce que** la couche réfléchissant les infrarouges est **caractérisée par** une réflexion infrarouge $RIR_C$ supérieure à 0.76 * (1-AIR$_C$).

**10.** Vitrage feuilleté selon l'une quelconque des revendications précédentes, **caractérisé en ce que** la couche réfléchissant les infrarouges est un empilage multicouche comprenant n couche(s) fonctionnelle(s) à base d'un matériau réfléchissant le rayonnement infrarouge, avec n $\geq$ 1, et n+1 revêtements diélectriques de telle sorte que chaque couche fonctionnelle est entourée par des revêtements diélectriques.

**11.** Vitrage feuilleté selon l'une quelconque des revendications précédentes, **caractérisé en ce que** la ou les couche(s) fonctionnelle(s) de la couche réfléchissant les infrarouges est à base d'argent.

**Patentansprüche**

**1.** Verbundglas, umfassend ein mit einer Infrarotreflektierenden Schicht beschichtetes transparentes Substrat, das über einen klebenden Kunststoff mit einer Scheibe aus Glasmaterial zusammengefügt ist, **dadurch gekennzeichnet, dass** es sich bei dem Substrat um ein Kalknatronsilikat-, Aluminosilikat- oder Borosilikatglas handelt, dessen Zusammensetzung einen Redox-Wert von weniger als 10 % aufweist und das durch eine solche für ein Glassubstrat mit einer Dicke von 4 mm definierte Infrarot-Reflexion $RIR_V$ zwischen 780 und 2500 nm gekennzeichnet ist, dass $RIR_V \geq 1{,}087$ * $TL_V$, wobei $TL_V$ die für ein Glas mit einer Dicke von 4 mm definierte Lichtdurchlässigkeit des Glases zwischen 380 und 780 nm ist, und dadurch, dass die Infrarot-reflektierende Schicht durch eine solche Lichtdurchlässigkeit $TL_C$ zwischen 380 und 780 nm gekennzeichnet ist, dass $TL_C \geq 1{,}3$ * $TIR_C$, wobei $TIR_C$ die Infrarotdurchlässigkeit der Schicht zwischen 780 und 2500 nm ist.

2. Verbundglas nach Anspruch 1, **dadurch gekennzeichnet, dass** es sich bei dem Substrat um ein Glas handelt, das durch eine solche Infrarot-Reflexion $RIR_V$ gekennzeichnet ist, dass $RIR_V \geq 1,087 \, {}^* \, TL_V + 5$.

3. Verbundglas nach Anspruch 1 oder Anspruch 2, **dadurch gekennzeichnet, dass** es sich bei dem Substrat um ein Glas handelt, das durch eine solche Infrarot-Reflexion $RIR_V$ gekennzeichnet ist, dass $RIR_V \geq 0,510 \, {}^* \, TL_V + 53$.

4. Verbundglas nach einem der vorhergehenden Ansprüche, **dadurch gekennzeichnet, dass** das Glas des Substrats eine Zusammensetzung aufweist, die einen folgenden in Gewichtsprozent in Bezug auf das Gesamtgewicht von Glas ausgedrückten Gehalt aufweist:

| | |
|---|---|
| Gesamteisen (ausgedrückt in Form von $Fe_2O_3$) | 0,002-0,06 % |
| $Cr_2O_3$ | 0,0001-0,06 %. |

5. Verbundglas nach einem der Ansprüche 1 bis 3, **dadurch gekennzeichnet, dass** das Glas des Substrats eine Zusammensetzung aufweist, die einen folgenden in Gewichtsprozent in Bezug auf das Gesamtgewicht von Glas ausgedrückten Gehalt aufweist:

| | |
|---|---|
| Gesamteisen (ausgedrückt in Form von $Fe_2O_3$) | 0,002-0,06 % |
| $Cr_2O_3$ | 0,0015-1 % |
| Co | 0,0001-1 %. |

6. Verbundglas nach einem der Ansprüche 1 bis 3, **dadurch gekennzeichnet, dass** das Glas des Substrats eine Zusammensetzung aufweist, die einen folgenden in Gewichtsprozent in Bezug auf das Gesamtgewicht von Glas ausgedrückten Gehalt aufweist:

| | |
|---|---|
| Gesamteisen (ausgedrückt in Form von $Fe_2O_3$) | 0,02-1 % |
| $Cr_2O_3$ | 0, 002-0, 5 % |
| Co | 0,0001-0,5 %. |

7. Verbundglas nach einem der Ansprüche 1 bis 3, **dadurch gekennzeichnet, dass** das Glas des Substrats eine Zusammensetzung aufweist, die einen folgenden in Gewichtsprozent in Bezug auf das Gesamtgewicht von Glas ausgedrückten Gehalt aufweist:

| | |
|---|---|
| Gesamteisen (ausgedrückt in Form von $Fe_2O_3$) | 0,002-1 % |
| $Cr_2O_3$ | 0,0010-0,5 % |
| Co | 0,0001-0,5 % |
| Se | 0,0003-0,5 %. |

8. Verbundglas nach einem der vorhergehenden Ansprüche, **dadurch gekennzeichnet, dass** die Infrarot-reflektierende Schicht durch eine Infrarot-Reflexion $RIR_C$ von mehr als $0,5 \, {}^* \, (1-AIR_C)$ gekennzeichnet ist.

9. Verbundglas nach einem der vorhergehenden Ansprüche, **dadurch gekennzeichnet, dass** die Infrarot-reflektierende Schicht durch eine Infrarot-Reflexion $RIR_C$ von mehr als $0,76 \, {}^* \, (1-AIR_C)$ gekennzeichnet ist.

10. Verbundglas nach einem der vorhergehenden Ansprüche, **dadurch gekennzeichnet, dass** es sich bei der Infrarot-reflektierenden Schicht um einen Mehrschichtstapel mit n funktionellen Schichten auf Basis eines Infrarotstrahlung reflektierenden Materials mit $n \geq 1$ und $n + 1$ derartigen dielektrischen Beschichtungen, dass jede funktionelle Schicht von den dielektrischen Beschichtungen umgeben ist, handelt.

11. Verbundglas nach einem der vorhergehenden Ansprüche, **dadurch gekennzeichnet, dass** die funktionelle Schicht bzw. die funktionellen Schichten der Infrarot-reflektierenden Schicht auf Silber basiert bzw. basieren.

**Claims**

1. Laminated glazing comprising, joined to a sheet of vitreous material by means of an adhesive plastic, a transparent substrate coated with an infrared-reflecting layer, **characterized in that** the substrate is a soda-lime-silica or aluminosilicate or borosilicate glass the composition of which has a redox lower than 10%, **characterized by** an infrared reflectance $RIR_V$ between 780 and 2500 nm, defined for a glass substrate of 4 mm thickness, such that $RIR_V \geq 1.087*TL_V$, $TL_V$ being the light transmittance of the glass between 380 and 780 nm, defined for a glass of 4 mm thickness, and **in that** the infrared-reflecting layer is **characterized by** a light transmittance $TL_C$ between 380 and 780 nm such that $TL_C \geq 1.3*TIR_C$, $TIR_C$ being the infrared transmittance of the layer between 780 and 2500 nm.

2. Laminated glazing according to Claim 1, **characterized in that** the substrate is a glass **characterized by** an infrared reflectance $RIR_V$ such that $RIR_V \geq 1.087*TL_V + 5$.

3. Laminated glazing according to Claim 1 or Claim 2, **characterized in that** the substrate is a glass **characterized by** an infrared reflectance $RIR_V$ such that $RIR_V \geq 0.510*TL_V + 53$.

4. Laminated glazing according to any one of the preceding claims, **characterized in that** the glass of the substrate has a composition that comprises, in an amount expressed in percentages by total weight of glass:

   | | |
   |---|---|
   | Total iron (expressed in the form of $Fe_2O_3$) | 0.002 - 0.06% |
   | $Cr_2O_3$ | 0.0001 - 0.06%. |

5. Laminated glazing according to any one of Claims 1 to 3, **characterized in that** the glass of the substrate has a composition that comprises, in an amount expressed in percentages by total weight of glass:

   | | |
   |---|---|
   | Total iron (expressed in the form of $Fe_2O_3$) | 0.002 - 0.06% |
   | $Cr_2O_3$ | 0.0015 - 1% |
   | Co | 0.0001 - 1%. |

6. Laminated glazing according to any one of Claims 1 to 3, **characterized in that** the glass of the substrate has a composition that comprises, in an amount expressed in percentages by total weight of glass:

   | | |
   |---|---|
   | Total iron (expressed in the form of $Fe_2O_3$) | 0.02 - 1% |
   | $Cr_2O_3$ | 0.002 - 0.5% |
   | Co | 0.0001 - 0.5%. |

7. Laminated glazing according to any one of Claims 1 to 3, **characterized in that** the glass of the substrate has a composition that comprises, in an amount expressed in percentages by total weight of glass:

   | | |
   |---|---|
   | Total iron (expressed in the form of $Fe_2O_3$) | 0.002 - 1% |
   | $Cr_2O_3$ | 0.0010 - 0.5% |
   | Co | 0.0001 - 0.5% |
   | Se | 0.0003 - 0.5%. |

8. Laminated glazing according to any one of the preceding claims, **characterized in that** the infrared-reflecting layer is **characterized by** an infrared reflectance $RIR_C$ higher than $0.5*(1-AIR_C)$.

9. Laminated glazing according to any one of the preceding claims, **characterized in that** the infrared-reflecting layer is **characterized by** an infrared reflectance $RIR_C$ higher than $0.76*(1-AIR_C)$.

10. Laminated glazing according to any one of the preceding claims, **characterized in that** the infrared-reflecting layer is a multilayer stack comprising n functional layer(s) based on a material that reflects infrared radiation, with n ≥ 1, and n+1 dielectric coatings such that each functional layer is flanked by dielectric coatings.

11. Laminated glazing according to any one of the preceding claims, **characterized in that** the one or more functional layers of the infrared-reflecting layer are silver-based.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120315410 A
- WO 2005115747 A
- US 20120275018 A
- WO 2014128016 A1
- WO 2014180679 A1
- WO 2015011040 A1
- WO 2015011041 A1
- WO 2015011042 A1
- WO 2015011043 A1
- WO 2015011044 A1
- EP 13198454 A
- EP 15172780
- EP 15172779
- EP 13193345
- EP 14167942
- EP 14177487